# EUROPEAN PATENT SPECIFICATION

(11) **EP 1 464 204 B1**
(45) Date of publication and mention of the grant of the patent: **06.04.2005**
(21) Application number: 02806038.2
(22) Date of filing: 30.12.2002
(51) Int. Cl.: H04R 23/00, H04R 1/46, H04R 1/44, G10H 3/18, G01H 9/00

(54) **DETECTION OF SOUND WAVES PRODUCED BY A MUSICAL INSTRUMENT**
DETEKTION VON DURCH EIN MUSIKINSTRUMENT ERZEUGTEN SCHALLWELLEN
DETECTION D'ONDES SONORES PRODUITES PAR UN INSTRUMENT DE MUSIQUE

(30) Priority: 09.01.2002 GB 0200408
(43) Date of publication of application: 06.10.2004
(73) Proprietor: Qinetiq Limited, London, SW1E 6PD (GB)
(72) Inventor: HODDER, Benjamin, Qinetiq Limited, Dorchester, Dorset, DT2 8XJ (GB); NASH, Philip John, Qinetiq Limited, Dorchester, Dorset, DT2 8XJ (GB); HILL, David John, Qinetic Limited, Dorchester, Dorset, DT2 8XJ (GB)
(74) Representative: Tocher, Alastair James
(86) International application number: PCT/GB2002/005938
(87) International publication number: WO 2003/059009

(56) References cited:
- US-A- 4 235 113
- US-A- 5 363 342
- US-A- 5 367 376
- US-B1- 6 285 806

## Description

The present invention relates to the field of musical instrument sound detection.

High quality sound detection and reproduction of sound generated by musical instruments, and in particular, a stringed musical instrument is notoriously difficult to achieve. One solution, developed for use with the guitar involves the use of magnetic pick-ups to convert vibrations of the string(s) into an electrical signal. Although successful this approach is fundamentally limited as the close proximity of the magnetic pick-ups has a detrimental effect upon the natural string vibrations (and hence tonal quality) of the sound.

A further problem with such systems and in fact with electrical sound detection devices in general is that they are subject to electromagnetic interference from objects in the vicinity, such as fluorescent strip lights, computer monitors etc. This becomes a serious issue in a recording studio environment where background noise needs to be reduced as much as possible.

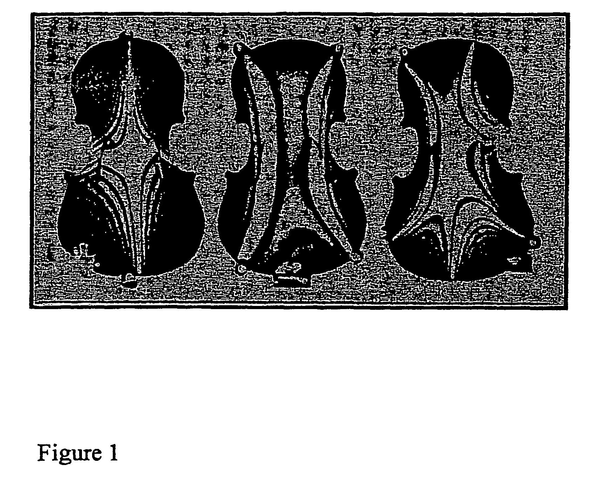

Piezoelectric sound detection devices have been developed for use with instruments having soundboards. These devices can be glued to a musical instrument that has a soundboard and the vibrations of the soundboard are detected. A drawback of such a system is that the piezoelectric element is generally glued to a single position on the soundboard and, as such, the tonal characteristics of the musical instrument are not fully captured. Given the complex nature of acoustic soundboard resonance (see Figure 1), it would be necessary to affix several piezoelectric devices in order to improve the quality of sound captured from vibrations of the soundboard alone. One problem with this is that owing to their relative lack of sensitivity piezoelectric devices require a reasonable contact surface area, this limits the number of devices that can be used and also affects the sound generated by the soundboard. Furthermore, the signals they produce are susceptible to electromagnetic interference which can be a problem particularly in environments such as recording studios which may have such things as monitor screens and strip lighting.

It would be desirable to provide an improved sound detection device.

A first aspect of the present invention provides a musical instrument sound detection system as recited in claim 1.

Fibre optic acoustic sensors have been developed as hydrophones for detecting sound in an underwater environment. Such sensors are disclosed in US-A- 5 363 342. They have been adapted for this use by the military as an alternative to existing sonar technology; a significant advantage being that the detected signals are sent as electromagnetic radiation along an optical fibre and as such electrical components do not need to be deployed in the underwater environment. The inventors of the present invention have realised that such devices can be adapted for use with musical instruments to provide improved sound detection. Optical fibre acoustic sensors are small and light and as such, even if attached to a musical instrument, they will only have a very small influence on the sounds produced by the musical instrument that they are detecting. Furthermore, the sensors themselves are immune to background electromagnetic radiation. Positioning the detector at some distance from the musical instrument, possibly even in a shielded environment will reduce electromagnetic interference with the electronics associated with the signal detector, the signal transmitted as electromagnetic radiation is immune to electromagnetic interference. Thus, the problems due to background noise from electrical equipment such as overhead strip lights, or monitors can be alleviated. A further advantage of the optical acoustic sensors pertains to the effective "in-air" range of the device. The fibre optic acoustic sensors have a short in-air acoustic range of around 5cm which is ideal for isolating one musical instrument from a neighbouring one, when several instruments are being detected together, for example, in a recording studio or during a live recording of several instruments.

Fibre laser devices have the advantage of being very small devices, generally being written into a length of doped optical fibre that is about 5cm long, with a diameter equal to that of the optical fibre.

Preferably, said optical fibre is coated with polyurethane. The polyurethane is caused to vibrate by the acoustic waves and as such serves to increase the sensitivity of the fibre optic acoustic sensor to acoustic waves. A fiber optic acoustic sensor embedded in polyurethane is also known from US-A-5 367 376.

In other embodiments, said fibre optic acoustic sensor comprises an interferometric detector comprising an optical fibre, a portion of said optical fibre being coiled around a compliant core, said sensor further comprising reflectors in optical communication with said optical fibre before and after said coil, such that a portion of said electromagnetic radiation is reflected before entering said coil by a first of said reflectors and a further portion of said electromagnetic radiation is reflected after passing through said coil by a second of said reflectors, said electromagnetic radiation detector being operable to detect variations in phase between said output electromagnetic radiation reflected by each of said reflectors.

Interferometric devices are typically wound around a mandrel having a diameter of about 2.5cm. The main advantage of the interferometric devices are their low cost consisting as they do of standard optical fibre wound around a mandrel.

Preferably, said fibre optic acoustic sensor comprises attachment means for attachment to a musical instrument. The provision of attachment means on the sensor itself makes the device particularly easy to use.

In some embodiments, said musical instrument is a stringed musical instrument.

The device of embodiments of the present invention is particularly well adapted to detect the sound from stringed musical instruments. In particular, the detection device does not interfere with the movement of the strings, which is not the case with magnetic pick-up detection devices. Furthermore, there is no constraint on the type of strings that can be used with these sound detection devices, thus, nylon as well as metal strings can be used.

With stringed devices the attachment means are for attachment across the sound hole, to the bridge, body, acoustic chamber or the soundboard of said stringed musical instrument.

These devices are particularly suitable for attachment to the soundboard as in addition to being light and not affecting the soundboard movement very much they are also sensitive to a larger area than similar piezo-electric devices

Characteristics of the sounds produced by stringed instruments are provided by string vibrations and subsequent vibrations of the soundboard and air within the acoustic chamber; the design of the acoustic chamber and the soundboard being critical in acoustic instruments. The positioning of the fibre optic acoustic sensor(s) affects the tonal quality of the sound that is received. Thus the position of the sensor relative to the bridge and fingerboard will provide control of the sound received. The ability to place a plurality of small sensors in different places means that the quality of sound that can be recorded is very high. In addition to the places listed above, the sensors could also be placed within the soundboard, or between the soundboard and the strings, by the use of appropriate attachment means.

In some embodiments, said system comprises a plurality of fibre optic acoustic sensors, said plurality of fibre optic sensors being arranged in series such that electromagnetic radiation from said source passes through each of said sensors in turn.

Although the sensors may be placed in parallel, placing them in series is a convenient way of connecting the acoustic sensors. Readings from individual sensors can be monitored and processed by the use of pulses and time division multiplexing.

In some embodiments said plurality of fibre optic acoustic sensors are arranged in series along an optical fibre, the distance between respective sensors being such that individual fibre optic sensors may be arranged on different musical instruments with optical fibre connecting said plurality of sensors.

This allows a plurality of different instruments to be recorded and the real time sounds recorded from each to be processed simultaneously by a central processing system.

Preferably, said musical instrument sound detection system further comprises a signal processor operable to process said output signals received from said electromagnetic radiation detector and to produce acoustic signals that are compatible with a conventional amplifier and/or sound recording system therefrom.

By using the sound detection system in conjunction with a signal processor, it can be used not only to detect sound received but in conjunction with conventional kit, such as amplifiers and/or recording equipment to reproduce it too. Given the sensitivity of the sound detection system a very high quality sound can be reproduced.

A further aspect of the present invention provides a musical instrument having a musical instrument sound detection system according to the first aspect of the present invention.

In some embodiments said musical instrument is a solid bodied guitar.

The present invention is particularly suitable for detecting the sound produced by a solid bodied or electric guitar. Generally an electric guitar requires magnetic pick-ups that detect the movement of metal strings and produce sounds related to that movement. One problem with the system is that the monitoring of the metal strings by the magnetic pick-ups effects their movement and thus, the tonal quality and sustain of the sound produced. The use of fibre acoustic sensors alleviates this problem improving the sound quality produced and also allowing other types of strings, such as nylon strings to be used.

A further aspect of the present invention provides a method of detecting sound from at least one musical instrument as recited in claim 11.

A still further aspect of the present invention provides the use of a fibre optic acoustic sensor within a musical instrument sound detection system according to the first aspect of the present invention, to detect sound generated by a musical instrument.

Embodiments of the present invention will now be described, by way of example only, with reference to the accompanying drawings, in which:
Figure 1 shows accoustic vibrations on a soundboard of a stringed instrument (from "Acoustics of Violins" by G.M. Hutchins, revised for Scientific American article, Oct 1981, photo by Dr Raul A stetson);
Figure 2A shows an interferometric fibre optic acoustic sensor,
Figure 2B shows a musical instrument sound detection system comprising interferometric acoustic sensors as shown in Figure 2A;
Figure 3A shows two types of fibre laser acoustic sensor;
Figure 3B shows a musical instrument sound detection system according to an embodiment of the present invention comprising fibre laser acoustic sensors as shown in Figure 3A;
Figure 4 schematically shows a cross section of a stringed instrument with an acoustic sensor attached thereto.

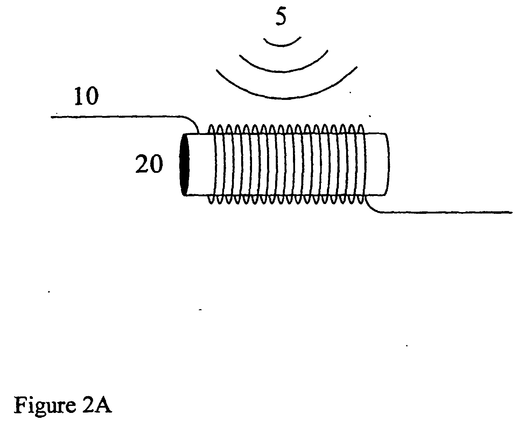

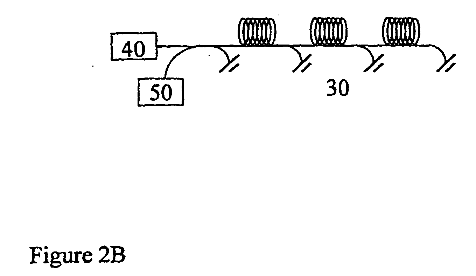

Figure 2A shows an interferometric fibre optic acoustic sensor of the type also known from US-A-6285806. This fibre optic acoustic sensor comprises an optical fibre 10 wound around a flexible mandrel 20. Figure 2B shows a plurality of these sensors connected in series and including a laser pump 40 and detector 50. The acoustic sensors comprises reflecting section 30 at either end of the fibre coil. The reflecting section being operable to reflect a portion of the electromagnetic radiation prior to the fibre coil and a further portion after the coil. A laser pump 40 generates pulses of electromagnetic radiation of different frequencies at a predetermined time from each other. A first pulse of frequency f1 is transmitted and then at a certain time later a second pulse of a different but close frequency f2 is transmitted. The time difference between the two pulses being transmitted is set to be the time taken for the electromagnetic radiation to travel through one coil, so that the second pulse of radiation at f2 enters the coil as the first pulse is reflected by the reflecting portion 30 at the end of the coil. Thus, these two radiation pulses interact and it is this interacting pulse that is measured. This occurs in each coil, with reflecting portions before and after each coil, reflecting a portion of the transmitted light. As the coils are all of the same length then the pulse of frequency f1 is always reflected from one end of a coil just as the pulse of f2 enters the other end. Acoustic waves 5 generated, for example, by a musical instrument, falling on the accoustic sensor cause slight distortions in the flexible mandrel causing changes in the length of the optical fibre 10 and the stress and flexion also cause slight changes in the refractive index of the optical fibre. These changes lead to a change in the phase of the electromagnetic radiation passing through and output from the optical fibre 10, and thus changes in the interactions between the two pulses. The detector 50 detects any pulse differences in these interacting signals, caused by acoustic waves varying the length and/or refractive index of the coils. The detector 40 uses a time division multiplexer (not shown) to look at the signal from individual coils separately. The coils are of the order of a hundred metres long, such that the time difference between the pulses f1 and f2 is of the order of microseconds as is the time difference between the interacting pulses to be detected. As it is phase change of electromagnetic radiation that is measured and the electromagnetic radiation is in or near the optical region then length changes of the order of nanometres can be measured. The flexible mandrel 20 is formed from an acrylic.

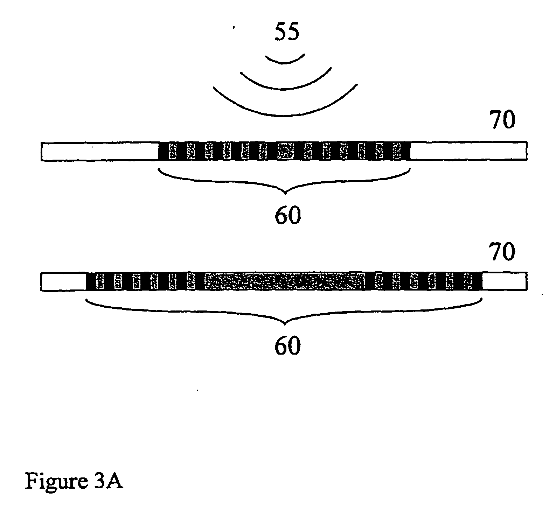

Figure 3A shows acoustic sensors for use in embodiments of the present invention. These fibre optic sensors comprise a region of optical fibre 60 doped with, for example, erbium, to form a lasing volume and comprising Bragg gratings written on to this lasing volume, the Bragg gratings acting as the mirrors for the lasing volume. Two types of fibre laser geometries are shown. The first comprises the two Bragg gratings having merely a quarter wavelength change in phase separating them, this is called a DFB (Distributed Feed Back) fibre laser. The second comprises the two Bragg gratings at a distance from each other with the cavity therebetween, this is called a DBR (Distributed Bragg Reflector) fibre laser. The fibre optic lasers are pumped by an electromagnetic source 80 and the laser radiation generated is monitored. Acoustic waves 55 falling on the optical fibre cause changes in the fibre length and possibly the refractive index, and thus changes in the Bragg grating pitch, which results in a shift in the laser wavelength generated.

Generally, the DFB fibre laser is considered to be optically more stable than the DBR device. Furthermore, it is currently being produced commercially so that the price of this device is expected to reduce significantly in the future.

In preferred embodiments, the doped optical fibre 60 and adjacent lengths of optical fibre 70 are coated with polyurethane. Acoustic waves 55 falling on the optical fibre set up vibrations in the polyurethane, this increases the sensitivity of the device to acoustic waves.

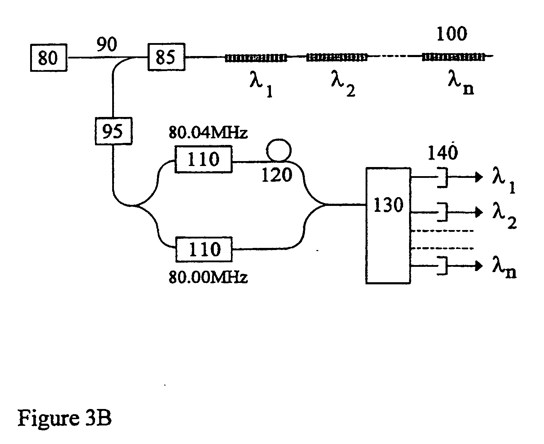

Figure 3B shows a musical instrument sound detection system comprising fibre laser acoustic sensors as shown in Figure 3A. In this system an electromagnetic source of radiation 80 transmits electromagnetic radiation into an optical fibre 90. The electromagnetic radiation is guided via a wavelength division multiplexing (WDM) coupler 85 to the fibre laser acoustic sensors 100, such as those disclosed in Figure 3A. Electromagnetic radiation generated by the optical fibre laser sensors propagates back through the WDM coupler and optical isolator 95 (included to prevent unwanted reflections returning to the sensors elements) prior to entering the input of a Mach-Zehnder Interferometer (MZI). The MZI geometry shown employs a path imbalance coil 120 and two acousto-optic modulators (AOM). The AOM's are set at 80.00MHz and 80.04MHz generating a difference frequency of 40KHz. In this system a wavelength division multiplexing unit 130 is used to separate the signals which are then sent to detectors 140.

The detectors of Figures 2B and 3B may be connected to a signal processor operable to relate these changes in phase or wavelength to the acoustic waves that produced them. In order to be able to monitor the acoustic waves picked up by individual sensors a pulsing system with time division multiplexing of the signals is used for the interferometric acoustic sensors or a wavelength division multiplexing system is used for the fibre laser sensors. If different sensors are used in the same system then the two multiplexing systems may be used together. In the embodiment shown, the fibre optic acoustic sensors are arranged in series, in alternative embodiments they may be arranged in parallel.

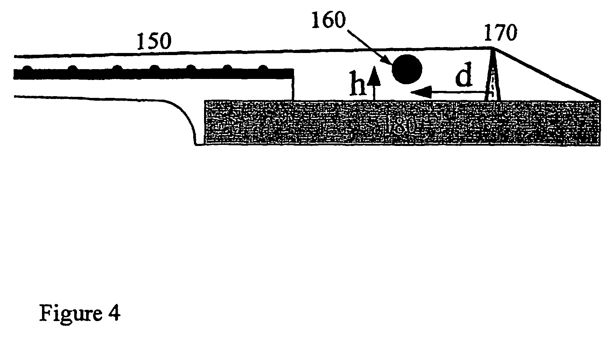

Figure 4 schematically shows a cross section of a solid bodied guitar having a fibre optic acoustic sensor 160 attached between the body 180 and the strings 150 of the instrument. The sensor detects the sound of the strings without affecting their movement. There exist a range of sensing means from vibration of the solid body to 'in-air' detection of the vibrating string. These different modes of detection can be accessed by altering the position (defined by h in figure 4) of the longitudinal axis of the sensor from the upper surface of the solid body. It should be noted that acoustic vibrations are different at different points on the soundboard (and the string) so that the positioning of the acoustic sensor (defined by d in figure 4) also affects the sound detected. A plurality of sensors can be used, with each placed at a different position so that different tonal qualities of the sound can be detected.

The sound detection system of the present invention may be coupled via a signal processor to a recording system, such that the sound detected can be recorded; alternatively it may be connected to an amplification system enabling the detected sound to be amplified and broadcast via a loudspeaker.

## Claims

1. A musical instrument sound detection system comprising:
a fibre optic acoustic sensor,
a source of electromagnetic radiation optically coupled to said fibre optic acoustic sensor and operable to input electromagnetic radiation to said fibre optic acoustic sensor, and
an electromagnetic radiation detector arranged to receive electromagnetic radiation output from said fibre optic acoustic sensor and operable to detect at least one property of said output electromagnetic radiation; wherein
said fibre optic acoustic sensor is responsive to sound generated by a musical instrument and is operable to vary said at least one property of said input electromagnetic radiation in response to that sound in order to generate the output electromagnetic radiation, said electromagnetic radiation detector being operable to detect variations in said at least one property of said output electromagnetic radiation indicative of this sound generated by the musical instrument and to produce output signals in response thereto,
**characterised in that**
said fibre optic acoustic sensor comprises a fibre laser acoustic sensor, comprising an optical fibre doped to provide a doped lasing volume, said fibre having two gratings provided in said doped volume, said fibre laser acoustic sensor being operable to vary a wavelength of said input electromagnetic radiation in response to the sound from the musical instrument, and said electromagnetic radiation detector being operable to detect variations in wavelength of said output electromagnetic radiation.

2. A musical instrument sound detection system according to claim 1, wherein said optical fibre is coated with polyurethane.

3. A musical instrument sound detection system according to any of the preceding claims, wherein said fibre optic acoustic sensor comprises attachment means for attachment to a musical instrument.

4. A musical instrument sound detection system according to any preceding claim, wherein said musical instrument is a stringed musical instrument.

5. A musical instrument sound detection system according to claim 3 or claim 4, wherein said attachment means are for attachment across the sound hole, to the bridge, body, acoustic chamber or the soundboard of said stringed musical instrument.

6. A musical instrument sound detection system according to any preceding claim, said system further comprising a plurality of fibre optic acoustic sensors, said plurality of fibre optic sensors being arranged in series such that electromagnetic radiation from said source passes through each of said sensors in turn.

7. A musical instrument sound detection system according to claim 6, wherein said plurality of fibre optic acoustic sensors are arranged in series along an optical fibre, the distance between respective sensors being such that individual fibre optic sensors may be arranged on different musical instruments with optical fibre connecting said plurality of sensors.

8. A musical instrument sound detection system according to any preceding claim, said musical instrument sound detection system further comprising a signal processor operable to process said output signals received from said electromagnetic radiation detector and to produce acoustic signals that are compatible with a conventional amplifier and/or sound recording system therefrom.

9. A musical instrument having a musical instrument sound detection system according to any one of claims 1 to 5 attached thereto, wherein said fibre optic acoustic sensor or sensors are arranged to receive sound generated by said musical instrument.

10. A musical instrument according to claim 9, wherein said musical instrument is a solid bodied guitar.

11. A method of detecting sound from at least one musical instrument comprising the steps of:
(i) arranging a fibre optic acoustic sensor to receive sound generated by a musical instrument, the sensor comprising a fibre-laser; and
(ii) detecting variations in the output wavelength of the fibre-laser.

12. The method of claim 11, wherein step (i) of said method comprises attaching said fibre optic acoustic sensor to said at least one musical instrument.

13. The method of claim 12, wherein said musical instrument is a stringed musical instrument.

14. The method of claim 13, wherein said fibre optic acoustic sensor is attached to the bridge of said stringed instrument.

15. The method of claim 13, wherein said fibre optic acoustic sensor is attached to the soundboard or body of said stringed instrument.

16. The method of claim 13, wherein said fibre optic acoustic sensor is attached between the sound board and the bridge of said stringed instrument.

17. The method of claim 11, said method further comprising the step of:
(iii) processing said output signals to produce acoustic signals that are compatible with a conventional amplifier and/or sound recording system.

18. The use of a fibre optic acoustic sensor comprising a fibre-laser within a musical instrument sound detection system to detect the sound generated by at least one musical instrument

## Patentansprüche

1. Musikinstrumenten-Schallerfassungssystem, das umfaßt:
- einen faseroptischen Schallsensor,
- eine Quelle einer elektromagnetischen Strahlung, optisch mit dem faseroptischen Schallsensor gekoppelt und zum Eingeben von elektromagnetischer Strahlung in den faseroptischen Schallsensor betreibbar, und
- einen Detektor elektromagnetischer Strahlung, der zum Empfang elektromagnetischer Strahlung angeordnet ist, die von dem faseroptischen Schallsensor ausgegeben wird und zur Erfassung mindestens einer Eigenschaft der ausgesandten elektromagnetischen Strahlung betreibbar ist, wobei
- der faseroptische Schallsensor auf Schall anspricht, der von einem Musikinstrument erzeugt wird, und der zur Änderung der mindestens einen Eigenschaft der empfangenen elektromagnetischen Strahlung in Reaktion auf diesen Schall betreibbar ist, um die Aussendung von elektromagnetischer Strahlung zu erzeugen, wobei der Detektor elektromagnetischer Strahlung zur Erfassung von Änderungen der mindestens einen Eigenschaft der ausgesandten elektromagnetischen Strahlung betreibbar ist, die diesen Schall anzeigt, der durch das Musikinstrument erzeugt wurde, und um Ausgangssignale als Reaktion darauf zu erzeugen,
**dadurch gekennzeichnet, dass**
der faseroptische Schallsensor einen Faserlaser-Schallsensor umfaßt, der eine optische Faser enthält, die zur Bereitstellung eines dotierten Laservolumens dotiert wurde, wobei die Faser zwei, im dotierten Volumen bereitgestellte Gitter aufweist, und der Faserlaser-Schallsensor zur Änderung einer Wellenlänge der empfangenen elektromagnetischen Strahlung in Reaktion auf den Schall vom Musikinstrument betreibbar ist, und der elektromagnetische Strahlungsdetektor zur Erfassung von Änderungen der Wellenlänge der ausgesandten elektromagnetischen Strahlung betreibbar ist.

2. Musikinstrumenten-Schallerfassungssystem nach Anspruch 1, wobei die optische Faser mit Polyurethan beschichtet ist.

3. Musikinstrumenten-Schallerfassungssystem nach einem der vorhergehenden Ansprüche, wobei der faseroptische Schallsensor zur Befestigung an einem Musikinstrument eine Befestigungseinrichtung umfaßt.

4. Musikinstrumenten-Schallerfassungssystem nach einem der vorhergehenden Ansprüche, wobei das Musikinstrument ein Saiteninstrument ist.

5. Musikinstrumenten-Schallerfassungssystem nach Anspruch 3 oder 4, wobei die Befestigungseinrichtung zur Befestigung quer über das Schallloch des Streichinstruments am Steg, am Körper, an der Schallkammer oder am Resonanzboden des Saiteninstruments vorgesehen ist.

6. Musikinstrumenten-Schallerfassungssystem nach einem der vorhergehenden Ansprüche, wobei das System ferner mehrere faseroptische Schallsensoren umfaßt und die faseroptischen Schallsensoren in Reihe derart angeordnet sind, dass die elektromagnetische Strahlung von der Quelle der Reihe nach durch jeden Sensor hindurchgeht.

7. Musikinstrumenten-Schallerfassungssystem nach Anspruch 6, wobei die mehreren faseroptischen Schallsensoren entlang einer optischen Faser in Reihe angeordnet sind und der Abstand zwischen den entsprechenden Sensoren so ist, dass einzelne faseroptische Schallsensoren auf verschiedenen Musikinstrumenten angeordnet werden können und die optische Faser die mehreren Sensoren verbindet.

8. Musikinstrumenten-Schallerfassungssystem nach einem der vorhergehenden Ansprüche, das ferner einen Signalprozessor umfaßt, der zur Verarbeitung der Ausgangssignale, die vom Detektor der elektromagnetischen Strahlung erhalten werden, und zur Erzeugung von akustischen Signalen betreibbar ist, die mit einem herkömmlichen Verstärker und/oder einem Tonaufzeichnungssystem derselben kompatibel sind.

9. Musikinstrument, an dem ein Musikinstrumenten-Schallerfassungssystem nach einem der Ansprüche 1 bis 5 angebracht ist, wobei der faseroptische Schallsensor oder die faseroptischen Schallsensoren so ausgeführt sind, dass sie den von einem Musikinstrument erzeugten Schall empfangen.

10. Musikinstrument nach Anspruch 9, wobei das Musikinstrument eine Gitarre mit einem einteiligen Körper ist.

11. Verfahren zur Erfassung des Schalls von mindestens einem Musikinstrument, das die folgenden Schritte umfaßt:
(i) Anordnung eines faseroptischen Schallsensors zum Empfang des von einem Musikinstrument erzeugten Schalls, wobei der Sensor einen Faserlaser umfaßt, und
(ii) Erfassung der Änderungen in der Ausgangswellenlänge des Faserlasers.

12. Verfahren nach Anspruch 11, wobei der Schritt (i) des Verfahrens die Befestigung des faseroptischen Schallsensors an mindestens einem Musikinstrument umfaßt.

13. Verfahren nach Anspruch 12, wobei das Musikinstrument ein Saiteninstrument ist.

14. Verfahren nach Anspruch 13, wobei der faseroptische Schallsensor am Steg des Saiteninstruments befestigt ist.

15. Verfahren nach Anspruch 13, wobei der faseroptische Schallsensor am Resonanzboden des Saiteninstruments befestigt ist.

16. Verfahren nach Anspruch 13, wobei der faseroptische Schallsensor zwischen dem Resonanzboden und dem Steg des Saiteninstruments befestigt ist.

17. Verfahren nach Anspruch 11, das ferner den folgenden Schritt umfaßt:
(iii) Verarbeitung der Ausgangssignale zur Erzeugung von Schallsignalen, die mit einem herkömmlichen Verstärker und/oder einem Tonaufzeichnungssystem kompatibel sind.

18. Verwendung eines faseroptischen Schallsensors, der zur Erfassung des von mindestens einem Musikinstrument erzeugten Schalls einen Faserlaser in einem Musikinstrumenten-Schallerfassungssystem umfaßt.

## Revendications

1. Système de détection du son d'un instrument de musique comprenant :
un capteur acoustique à fibre optique ;
une source de rayonnement électromagnétique optiquement couplée au dit capteur acoustique à fibre optique et actionnable pour émettre un rayonnement électromagnétique vers ledit capteur acoustique à fibre optique ; et
un détecteur de rayonnement électromagnétique arrangé pour recevoir une sortie de rayonnement électromagnétique depuis le capteur acoustique à fibre optique et actionnable pour détecter au moins une propriété de ladite sortie de rayonnement électromagnétique ; dans lequel
ledit capteur acoustique à fibre optique réagit au son généré par un instrument de musique et est actionnable pour faire varier ladite au moins une propriété dudit rayonnement électromagnétique d'entrée en réponse à ce son de manière à générer le rayonnement électromagnétique de sortie, ledit détecteur de rayonnement électromagnétique étant actionnable pour détecter des variations dans ladite au moins une propriété dudit rayonnement électromagnétique de sortie indicatif de ce son généré par l'instrument de musique et pour produire des signaux de sortie en réponse à celui-ci,
**caractérisé en ce que**
ledit capteur acoustique à fibre optique comprend un capteur acoustique à laser à fibre comprenant une fibre optique dopée pour procurer un volume actif d'émission laser, ladite fibre ayant deux réseaux disposés dans ledit volume dopé, ledit capteur acoustique à laser à fibre étant actionnable pour faire varier une longueur d'onde dudit rayonnement électromagnétique d'entrée en réponse au son issu de l'instrument de musique, et ledit détecteur de rayonnement électromagnétique étant actionnable pour détecter des variations de longueur d'onde dudit rayonnement électromagnétique de sortie.

2. Système de détection du son d'un instrument de musique selon la revendication 1, dans lequel ladite fibre optique est gainée de polyuréthane.

3. Système de détection du son d'un instrument de musique selon l'une quelconque des revendications précédentes, dans lequel ledit capteur acoustique à fibre optique comprend des moyens de fixation pour être fixé à un instrument de musique.

4. Système de détection du son d'un instrument de musique selon l'une quelconque des revendications précédentes, dans lequel ledit instrument de musique est un instrument de musique à cordes.

5. Système de détection du son d'un instrument de musique selon la revendication 3 ou la revendication 4, dans lequel lesdits moyens de fixation permettent une fixation de part et d'autre du trou de la caisse, au niveau du pont, du corps, de la chambre acoustique ou de la caisse dudit instrument de musique à corde.

6. Système de détection du son d'un instrument de musique selon l'une quelconque des revendications précédentes, ledit système comprenant en outre une pluralité de capteurs acoustiques à fibre optique, ladite pluralité de capteurs à fibre optique étant arrangés en série de manière à ce qu'un rayonnement électromagnétique issu de cette source passe à travers chacun des capteurs à tour de rôle.

7. Système de détection du son d'un instrument de musique selon la revendication 6, dans lequel ladite pluralité de capteurs acoustiques à fibre optique sont arrangés en série le long d'une fibre optique, la distance entre les capteurs respectifs étant telle que des capteurs à fibre optique individuels peuvent être arrangés sur différents instruments de musique avec une fibre optique connectant ladite pluralité de capteurs.

8. Système de détection du son d'un instrument de musique selon l'une quelconque des revendications précédentes, ledit système de détection du son d'un instrument de musique comprenant en outre un processeur de signal actionnable pour traiter lesdits signaux de sortie reçus dudit détecteur de rayonnement électromagnétique et pour produire des signaux acoustiques qui sont compatibles avec un amplificateur conventionnel et/ou un système d'enregistrement du son.

9. Instrument de musique ayant un système de détection du son d'un instrument de musique y étant fixé, selon l'une quelconque des revendications 1 à 5, dans lequel ledit et/ou lesdits capteurs acoustiques à fibre optique sont arrangés pour recevoir un son généré par ledit instrument de musique.

10. Instrument de musique selon la revendication 9, dans lequel ledit instrument de musique est une guitare au corps plein.

11. Procédé de détection du son provenant d'au moins un instrument de musique comprenant les étapes consistant à :
i. arranger un capteur acoustique à fibre optique pour recevoir le son généré par un instrument de musique, le capteur comprenant un laser à fibre ; et
ii. détecter des variations dans la longueur d'onde de sortie du laser à fibre.

12. Procédé selon la revendication 11, dans lequel l'étape (i) dudit procédé comprend de fixer ledit capteur acoustique à fibre optique au dit au moins un instrument de musique.

13. Procédé selon la revendication 12, dans lequel ledit instrument de musique est un instrument de musique à cordes.

14. Procédé selon la revendication 13, dans lequel ledit capteur acoustique à fibre optique est fixé au pont dudit instrument de musique à cordes.

15. Procédé selon la revendication 13, dans lequel ledit capteur acoustique à fibre optique est fixé à la caisse ou au corps dudit instrument de musique à cordes.

16. Procédé selon la revendication 13, dans lequel ledit capteur acoustique à fibre optique est fixé entre la caisse et le pont dudit instrument de musique à cordes.

17. Procédé selon la revendication 11, ledit procédé comprenant en outre l'étape consistant à :
iii. traiter lesdits signaux de sortie pour produire des signaux acoustiques qui sont compatibles avec un amplificateur conventionnel et/ou un système d'enregistrement du son.

18. Utilisation d'un capteur acoustique à fibre optique comprenant un laser à fibre dans un système de détection du son d'un instrument de musique afin de détecter le son généré par au moins un instrument de musique.
